# FASCICULE DE BREVET EUROPEEN

(11) **EP 1 040 953 B1**
(45) Date de publication et mention de la délivrance du brevet: **03.09.2003**
(21) Numéro de dépôt: 00400852.0
(22) Date de dépôt: 28.03.2000
(51) Int. Cl.: B60K 15/05, E05B 65/12

(54) **Trappe pour réservoir de carburant de véhicule automobile avec verrouillage perfectionné**
Klappe für Kraftfahrzeug- Kraftstofftank mit verbessertem Verschluss
Filler flap for automotive vehicle fuel tank with improved lock

(30) Priorité: 29.03.1999 FR 9903895
(43) Date de publication de la demande: 04.10.2000
(73) Titulaire: VALEO SECURITE HABITACLE, 94042 Créteil (FR)
(72) Inventeur: Alliot, Pascal, 78710 Rosny sur Seine (FR); Santos, Alain, 93120 La Courneuve (FR); Marquet, Philippe, 49250 Brion (FR)
(74) Mandataire: Lenne, Laurence

(56) Documents cités:
- EP-A- 0 808 980
- EP-A- 0 855 486
- DE-A- 4 135 094
- FR-A- 2 474 575
- US-A- 4 848 509

## Description

L'invention concerne une trappe, en particulier pour un dispositif de remplissage pour un réservoir de carburant de véhicule automobile comportant des moyens perfectionnés de verrouillage. Une trappe selon le préambule de la revendication 1 est connue.

L'invention concerne plus particulièrement un dispositif de remplissage d'un réservoir de carburant de véhicule automobile, du type dans lequel une trappe est montée pivotante entre une position fermée, dans laquelle elle empêche l'accès à un orifice supérieur de remplissage du dispositif, et une position ouverte dans laquelle elle en libère l'accès, et du type dans lequel il est prévu des moyens de verrouillage de la trappe en position fermée.

Pour assurer le verrouillage de la trappe, il a tout d'abord été proposé de munir celle-ci d'un simple verrou rotatif à barillet que l'automobiliste pouvait déverrouiller ou verrouiller à l'aide d'une clé.

Par la suite, il est apparu intéressant de pouvoir commander le verrouillage ou le déverrouillage de la trappe à essence à distance, c'est-à-dire soit depuis l'intérieur du véhicule, soit à l'aide d'une télécommande du type à infrarouge, à ultrasons ou à radiofréquence.

Dans de tels cas, le verrouillage de la trappe à essence est couplé à la commande du verrouillage des portières latérales du véhicule et il peut par exemple être assuré par un actionneur électromagnétique.

Selon l'art antérieur, l'actionneur électromagnétique est implanté sur la carrosserie du véhicule, à proximité de la trappe et il comporte un pêne susceptible de coopérer avec une gâche de la trappe pour l'immobiliser en position fermée ou, inversement, il est porté par la face interne de la trappe et il comporte un pêne susceptible de coopérer avec une gâche fixe du dispositif de remplissage ou d'une partie environnante de la carrosserie.

C'est notamment le cas pour un véhicule comportant une unité centrale électronique de gestion des ordres de verrouillage et de décondamnation simultané des serrures ou autres moyens de verrouillage de tous les ouvrants du véhicule qui reçoit des ordres de verrouillage ou de décondamnation à partir d'un module d'identification d'un utilisateur autorisé du véhicule.

Un tel module d'identification peut comporter un récepteur fixe tel qu'une antenne porté par le véhicule qui échange des signaux avec un émetteur porté par l'utilisateur autorisé, qui est par exemple un transpondeur passif, c'est-à-dire sans source autonome de courant, qui, en réponse à un signal d'excitation émis par l'antenne, émet automatiquement un signal d'identification comportant notamment un code d'identification.

L'unité centrale électronique a pour fonction de reconnaître le code reçu et, si ce dernier correspond au code d'un utilisateur autorisé, de provoquer la décondamnation centralisée des différentes serrures équipant les différents ouvrants du véhicule.

Les serrures ayant été décondamnées, l'utilisateur peut alors ensuite provoquer librement l'ouverture de l'un ou l'autre des ouvrants en agissant classiquement sur la poignée de manoeuvre de la serrure correspondante qui lui permet aussi plus généralement de manoeuvrer l'ouvrant après l'ouverture de la serrure ou en agissant directement sur la trappe à essence une fois qu'elle est déverrouillée.

Lorsque l'émetteur constitué par le transpondeur est un émetteur passif activé automatiquement par l'antenne, celui-ci est porté par l'utilisateur, par exemple à son poignet ou dans un accessoire vestimentaire, et la distance efficace d'échange de signaux radioélectriques entre l'antenne et le transpondeur est réduite à quelques dizaines de centimètres. Ce n'est donc que lorsque par exemple la main de l'utilisateur approche de l'antenne portée par le véhicule que le module d'identification va pouvoir être mis en oeuvre.

Le récepteur n'émet bien entendu pas en permanence et il est nécessaire que l'utilisateur provoque son activation par une action volontaire, par exemple de nature mécanique en agissant sur un commutateur.

L'ergonomie optimale d'un tel dispositif d'ouverture impose, pour simplifier les différentes opérations, que le récepteur soit activé lorsque l'utilisateur agit sur la poignée de manoeuvre qui va ensuite lui servir à provoquer l'ouverture de la serrure et à manipuler l'ouvrant, notamment la porte d'accès au siège du conducteur.

Toutefois, une telle conception n'est pas entièrement satisfaisante dans la mesure où, dans les cas de la trappe à essence, l'ouverture de cette dernière en vue du remplissage du réservoir nécessite de déverrouiller de manière centralisée tous les ouvrants du véhicule.

Le déverrouillage centralisé est gênant notamment en ce qu'il peut permettre un vol du véhicule lorsque le conducteur est entrain de remplir le réservoir dans une station en libre-service.

Le document DE 41 35 094 A décrit une porte pour un véhicule automobile qui prévoit des moyens de verrouillage de la porte en position fermée, comportant un actionneur motorisé, la porte étant associée à un système de commande qui comporte une unité centrale électronique de gestion des ordres de verrouillage et de décondamnation des ouvrants du véhicule. L'unité centrale comporte un module d'identification d'un utilisateur autorisé du véhicule. La porte est associée à un commutateur qui est commandé par action manuelle sur la poignée de la porte. Cette action manuelle permet d'ouvrir seulement la porte dont le commutateur est actionné. Les autres portes du véhicule restent verrouillées.

On connaît également le document EP-A-0 808 980 qui décrit une trappe pour un dispositif de remplissage pour un réservoir de carburant qui est muni d'un commutateur.

L'invention a pour objet de proposer une nouvelle conception d'une trappe pour un dispositif de remplissage du réservoir de carburant d'un véhicule automobile qui remédie à ces inconvénients.

Dans ce but, l'invention propose une trappe, en particulier pour un dispositif de remplissage d'un réservoir de carburant de véhicule automobile, du type dans lequel la trappe est montée pivotante, autour d'un axe d'articulation, entre une position fermée dans laquelle elle empêche l'accès à un orifice supérieur du dispositif et une position ouverte dans laquelle elle en libère l'accès, du type dans lequel il est prévu des moyens de verrouillage de la trappe en position fermée qui comportent un actionneur motorisé qui commande un pêne destiné à être reçu dans une gâche pour assurer le verrouillage de la trappe, et du type dans lequel le dispositif de remplissage est associé à un système de commande qui comporte une unité centrale électronique de gestion des ordres de verrouillage et de décondamnat on des ouvrants du véhicule qui comporte un module d'identification d'un utilisateur autorisé du véhicule comportant un récepteur qui échange des signaux avec un émetteur porté par l'utilisateur autorisé du véhicule et qui, en réponse à une signal d'excitation émis par le récepteur, émet un signal d'identification, caractérisée en ce qu'elle est associée à un commutateur qui est commandé par action manuelle sur la trappe, qui appartient au module d'identification et qui, lorsqu'il est dans sa position active, provoque l'activation du module d'identification en vue d'autoriser le déverrouillage de la trappe.

Selon d'autres caractéristiques de l'invention :
- en position fermée et verrouillée, la trappe est susceptible de pivoter autour de son axe d'articulation dans le sens correspondant à sa fermeture et selon une surcourse permettant de commander le commutateur jusqu'à sa position active ;
- la trappe est rappelée vers sa position fermée par des moyens élastiques, et la surcourse s'effectue à l'encontre de l'effort appliqué à la trappe par ces moyens de rappel élastique;
- l'axe d'articulation de la trappe est agencé au voisinage d'un bord latéral de la trappe, et le commutateur est agencé au voisinage d'un autre bord latéral opposé de la trappe ;
- une partie du panneau constitutif de la trappe est déformable élastiquement par action manuelle sur cette partie selon une direction sensiblement perpendiculaire au plan général du panneau, et le commutateur est agencé au droit de cette partie déformable ;
- le commutateur est porté par une partie fixe du dispositif de remplissage et est commandé par un poussoir porté par la trappe ;
- le commutateur est porté par la face interne de la trappe et est commandé par un poussoir porté par une partie fixe du dispositif de remplissage ;
- le poussoir s'étend selon une direction globalement perpendiculaire au plan général de la trappe ;
- le commutateur est protégé par une membrane souple d'étanchéité ;

La présente invention a également pour objet un système de commande tel que défini dans la revendication 10.

D'autres caractéristiques et avantages de l'invention apparaîtront à la lecture de la description détaillée qui suit pour la compréhension de laquelle on se reportera aux dessins annexés dans lesquels :
- la figure 1 est une vue simplifiée en perspective, avec arrachement partiel, qui représente l'aménagement d'un dispositif de remplissage conforme aux enseignements de l'invention dans un élément de carrosserie d'un véhicule automobile ;
- la figure 2 est une vue de détaillée à plus grande échelle, selon un plan vertical transversal passant par les moyens de verrouillage de la trappe et par le commutateur d'activation du module d'identification, la trappe étant représentée dans sa position fermée ;
- la figure 3 est une vue similaire à celle de la figure 2 sur laquelle la trappe est représentée dans sa position de commande de l'activation du module d'identification ; et
- la figure 4 est une vue similaire à celles des figures 2 et 3 sur laquelle la trappe est représentée en position partiellement ouverte.

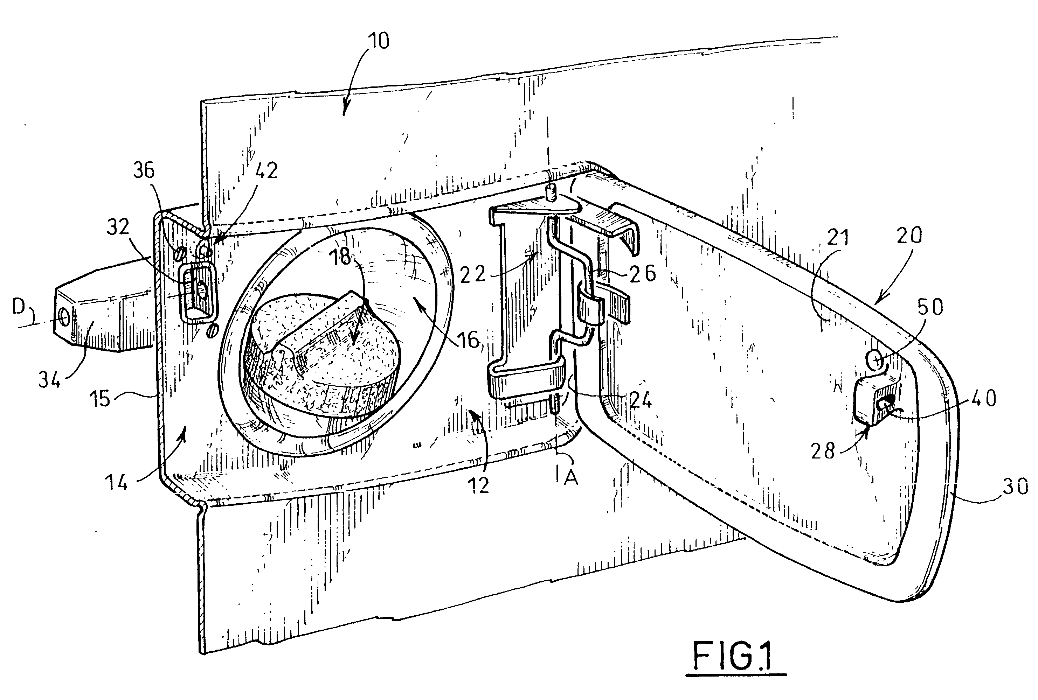

On a représenté à la figure 1 un élément de carrosserie 10 d'un véhicule automobile qui se présente sous la forme d'une tôle appartenant par exemple à une aile latérale arrière de véhicule dans laquelle est formé, par exemple à la faveur d'un embouti, un logement 12 qui est ici de forme générale parallélépipédique rectangle délimité par un fond 14 parallèle au plan de la tôle 10 .

Le fond 14 comporte un trou central circulaire dans lequel est monté un bol de remplissage 16, qui est par exemple réalisé par moulage en matière plastique et qui comporte un trou de remplissage, non visible à la figure 1, normalement fermé par un bouchon de remplissage 18.

D'une manière connue, afin d'améliorer l'esthétique générale du véhicule et pour éviter le vol de carburant, par accès au logement 12 et donc au bouchor 18, le logement 12 est muni d'une trappe de fermeture 20 qui se présente sous la forme d'un panneau rectangulaire, d'orientation générale verticale, dont les dimensions sont complémentaires de celle du contour du logement 12.

La trappe 20 est montée articulée par rapport à la carrosserie 10, ici autour d'un axe verticale d'articulation A, par l'intermédiaire de moyens formant charnière 22 agencés au voisinage du bord latéral vertical avant 24 de la trappe 20.

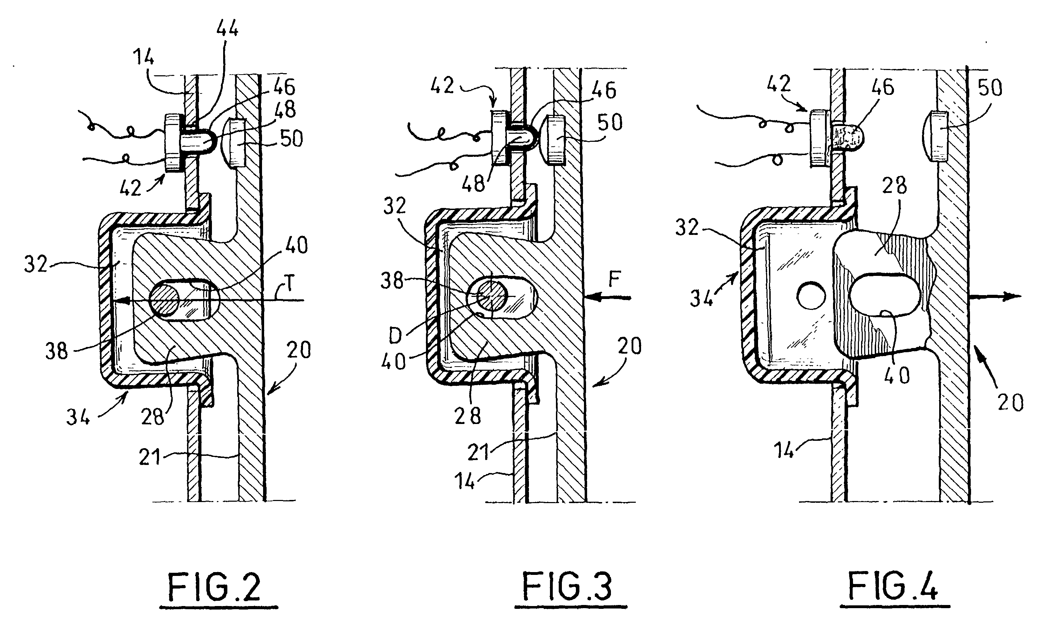

La trappe 20 est ainsi montée pivotante entre sa position angulaire maximale d'ouverture représentée à la figure 1 et une position angulaire maximale de fermeture représentée à la figure 2 dans laquelle elle ferme complètement le logement 12, la peau extérieure de la trappe 20 étant alors sensiblement affleurante à celle de la tôle de carrosserie 10.

La trappe 20 est munie de moyens 26 de rappel élastique, qui sont ici réalisés sous la forme d'un élément élastique bistable, qui la sollicitent vers l'un ou l'autre de ses deux états stables ouvert ou fermé.

Selon un agencement connu, et de manière à permettre le verrouillage de la trappe à essence 20 en position fermée, la trappe 20 et le logement 12 comportent des moyens de verrouillage du type à gâche et pêne.

Plus précisément, la gâche 28 se présente ici sous la forme d'un anneau qui s'étend dans un plan vertical perpendiculaire au plan général de la trappe 20 au voisinage de son bord latéral vertical arrière 30 et qui, en position fermée de la trappe 20, est reçu dars un logement 32 appartenant à une unité 34 motorisée de verrouillage.

Selon un agencement connu, l'unité 34 se présente sous la forme d'un module qui est monté sur la face arrière 15 du fond en tôle 14 du logement 12, par exemple aux moyen de deux vis 36.

Le module 34 comporte notamment un pêne motorisé 38 qui se présente ici sous la forme d'une tige cylindrique 38, voir figures 2 à 4, qui est montée mobile selon son axe dans le module 34, ici selon une direction D horizontale, de manière à pouvoir s'étendre à l'intérieur de l'ouverture 40 de l'anneau 28 formant gâche.

Comme on peut le voir à la figure 2, en position fermée et verrouillée de la trappe, la tige 38 formant pêne est reçue dans l'ouverture 40 pour retenir la gâche 28 dans le logement 32 et immobiliser ainsi la trappe 20 dans sa position fermée, c'est-à-dire qu'il est alors impossible de la faire pivoter autour de son axe A et donc de la déplacer de la gauche vers la droite en considérant la figure 2.

Par contre, comme on peut le voir sur cette figure 2, l'anneau 28 et reçu avec jeu selon la direction horizontale et transversale T qui est la direction de déplacement relatif de l'anneau 28 par rapport au logement 32 lorsque la trappe 20 est déplacée angulairement dans le sens de sa fermeture.

Afin de permettre une telle surcourse de la trappe 20 par rapport à la tôle 14, dans le sens correspondant à sa fermeture, l'ouverture 40 se présente sous la forme d'une lumière oblongue parallèle à la direction T dans laquelle la tige 38 formant pêne peut se déplacer.

En considérant la figure 2, il est donc possible de déplacer la trappe 20 de la droite vers la gauche selon la surcourse pour atteindre la position illustrée à la figure 3.

Conformément aux enseignements de l'invention, cette surcourse permet d'actionner manuellement un commutateur électrique 42 associé à la trappe.

Le commutateur électrique 42 est monté sur le fond 14 à travers un trou 44 de celui-ci, ici à proximité du logement 32. Le commutateur 42 est protégé par une membrane d'étanchéité en élastomère 46 et il comporte un organe d'actionnement 48 réalisé sous la forme d'une tige qui s'étend à travers le trou 44 selon une direction horizontale transversale parallèle à la direction T de manière à faire saillie à l'intérieur du logement 12 à proximité du contour rectangulaire du logement 32.

Le commutateur 42 est ainsi conçu et agencé de manière que l'on puisse en commander le fonctionnement par l'intermédiaire de la trappe 20 en déplaçant celle-ci, selon la surcourse mentionnée précédemment, de la position illustrée à la figure 2 à la position illustrée à la figure 3.

Pour améliorer la qualité et la précision de l'actionnement du commutateur 42, la face interne 21 de la trappe 20 comporte un poussoir 50 formé en relief et qui s'étend globalement selon la direction horizontale perpendiculaire au plan de la trappe 20, comme l'anneau 28 formant gâche.

L'actionnement du commutateur 42, en appliquant manuellement un effort F sur la trappe à essence 20 pour lui faire parcourir la surcourse mentionnée précédemment, s'effectue à l'encontre de l'effort élastique qui rappelle la trappe 20 dans sa position fermée de repos illustré à la figure 2.

Conformément à l'agencement selon l'invention, le dispositif de remplissage qui vient d'être décrit comporte ainsi un commutateur 42 qui est relié à l'unité centrale électronique, non représentée, de gestion et de commande du verrouillage des différents ouvrants du véhicule tels que par exemple les portes d'accès à l'habitacle, un hayon, le capot moteur, la trappe à essence 20, etc.

En agissant manuellement sur la trappe 20, un utilisateur peut ainsi envoyer un signal, par l'intermédiaire du commutateur 42, à l'unité centrale de verrouillage qui indique à celle-ci sa volonté d'ouvrir la trappe à essence 20 et donc d'obtenir son déverrouillage par l'intermédiaire du module de verrouillage commandé 34 afin que celui-ci commande le pêne 38 pour libérer la gâche 28 comme on peut le voir à la figure 4.

Ce signal de demande de déverrouillage de la trappe 20 peut ainsi être analysé et traité par l'unité centrale électronique qui commande alors l'interrogation d'un badge, actif ou passif, d'identification porté, de manière connue, par l'utilisateur qui demande le déverrouillage de la trappe 20. Cette interrogation s'effectue au moyen d'une antenne, non représentée, qui est agencée à proximité de la trappe à essence et qui est par exemple intégrée à la poignée de commande de l'ouverture de la serrure de la porte latérale du véhicule qui est immédiatement adjacente à la zone de la carrosserie dans laquelle est située le dispositif de remplissage.

La conception selon l'invention permet ainsi d'obtenir un déverrouillage de la trappe à essence qui est indépendant de l'état de verrouillage des autres ouvrants.

Sans sortir du cadre de l'invention, l'unité centrale de verrouillage et de décondamnation des ouvrants peut conserver une possibilité de commande centralisée de décondamnation et ou de verrouillage simultané de tous les ouvrants.

Selon une variante non représentée, le commutateur 42 peut être intégré au module de verrouillage 34.

Selon une autre variante non représentée, le module de verrouillage peut-être porté par la trappe à essence 20 avec l'anneau formant gâche porté par la tôle de carrosserie.

Sans sortir du cadre de l'invention, lorsque la conception de la trappe 20 le permet, c'est-à-dire lorsqu'elle présente une certaine capacité de déformation élastique de certaines des parties de son panneau principal, il est possible de prévoir que l'actionnement du commutateur 42 s'effectue en déformant manuellement et temporairement la trappe 20 dans une zone de celle-ci aménagée en regard du commutateur 42.

Selon une autre variante, il est possible de réaliser le bol de remplissage 16 avec des dimensions plus importantes pour constituer un sous-ensemble qui intègre les moyens d'articulation de la trappe à essence 20, le module 34 de verrouillage, etc., ce sous-ensemble ou module de remplissage étant rapporté sur le véhicule.

Encore à titre de variante, le commutateur peut être porté par la face interne de la trappe et être commandé par un poussoir porté par une partie fixe du dispositif de remplissage.

L'invention peut aussi trouvé à s'appliquer dans le cas où la trappe à essence 20 est elle-même motorisée, c'est-à-dire que ses mouvements de pivotement autour de l'axe A entre ses positions ouverte et fermée sont provoqués par un actionneur en réponse à un ordre d'ouverture ou de fermeture validé par l'unité centrale électronique.

## Revendications

1. Trappe (20), en particulier pour un dispositif de remplissage d'un réservoir de carburant de véhicule automobile, du type montée pivotante, autour d'un axe d'articulation (A), entre une position fermée dans laquelle elle empêche l'accès à un orifice supérieur (18) du dispositif (10) et une position ouverte dans laquelle elle en libère l'accès, du type dans lequel il est prévu des moyens (28, 34, 38) de verrouillage de la trappe (20) en position fermée qui comportent un actionneur motorisé (34) qui commande un pêne (38) destiné à être reçu dans une gâche (28) pour assurer le verrouillage de la trappe (20), et du type dans lequel le dispositif de remplissage est associé à un système de commande qui comporte une unité centrale électronique de gestion des ordres de verrouillage et de décondamnation des ouvrants (20) du véhicule qui comporte un module d'identification d'un utilisateur autorisé du véhicule comportant un récepteur qui échange des signaux avec un émetteur porté par l'utilisateur autorisé du véhicule et qui, en réponse à une signal d'excitation émis par le récepteur, émet un signal d'identification, **caractérisée en ce qu'**elle est associée à un commutateur (42) qui est commandé par action manuelle sur la trappe (20), qui appartient au module d'identification et qui, lorsqu'il est dans sa position active, provoque l'activation du module d'identification en vue d'autoriser le déverrouillage de la trappe (20).

2. Trappe selon la revendication 1, **caractérisée en ce que**, en position fermée et verrouillée, elle est susceptible de pivoter autour de son axe d'articulation (A) dans le sens correspondant à sa fermeture et selon une surcourse permettant de commander le commutateur (42) jusqu'à sa position active.

3. Trappe selon la revendication 2, **caractérisée en ce qu'**elle est rappelée vers sa position fermée par des moyens élastiques (26), et **en ce que** ladite surcourse s'effectue à l'encontre de l'effort appliqué à la trappe (20) par ces moyens de rappel élastique.

4. Trappe selon l'une des revendications 2 ou 3, **caractérisée en ce que** l'axe (A) d'articulation de la trappe (20) est agencé au voisinage d'un bord latéral (24) de la trappe (20), et **en ce que** le commutateur (42) est agencé au voisinage d'un autre bord latéral opposé (30) de la trappe

5. Trappe selon la revendication 1, **caractérisée en ce qu'**une partie du panneau constitutif de la trappe est déformable élastiquement par action manuelle sur cette partie selon une direction sensiblement perpendiculaire au plan général du panneau, et **en ce que** le commutateur est agencé au droit de cette partie déformable.

6. Trappe selon l'une quelconque des revendications précédentes, **caractérisée en ce que** le commutateur (42) est porté par une partie fixe du dispositif de remplissage et est commandé par un poussoir (50) porté par la trappe (20).

7. Trappe selon l'une quelconque des revendications1 à 5, **caractérisée en ce que** le commutateur est porté par la face interne de la trappe et est commandé par un poussoir porté par une partie fixe du dispositif de remplissage.

8. Trappe selon l'une des reverdications 6 ou 7, **caractérisée en ce que** le poussoir (50) s'étend selon une direction globalement perpendiculaire au plan général de la trappe (20).

9. Trappe selon la revendication précédente, **caractérisée en ce que** le commutateur (42, 48) est protégé par une membrane souple d'étanchéité (46).

10. Système de commande associé à un dispositif de remplissage d'un réservoir de carburant de véhicule automobile comprenant une trappe telle que définie dans les revendications précédentes, le système de commande étant du type comportant une unité centrale électronique de gestion des ordres de verrouillage et de décondamnation des ouvrants (20) du véhicule, un module d'identification d'un utilisateur autorisé du véhicule comportant un récepteur qui échange des signaux avec un émetteur porté par l'utilisateur autorisé du véhicule et qui, en réponse à une signal d'excitation émis par le récepteur, émet un signal d'identification, caractérisé en ce le récepteur comporte une antenne à proximité de la poignée de commande de l'ouverture d'une porte proche de la trappe (20).

## Patentansprüche

1. Klappe (20), insbesondere für eine Einfüllvorrichtung eines Kraftstoffbehälters eines Kraftfahrzeuges, wobei die Klappe zwischen einer geschlossenen Stellung, bei der sie den Zugang zu einer oberen Öffnung (18) der Vorrichtung (10) verhindert, und einer geöffneten Stellung, in der sie den Zugang freigibt, um eine Schwenkachse (A) schwenkbar montiert ist, wobei Mittel (28, 34, 38) zum Verriegeln der Klappe (20) in ihrer geschlossenen Stellung vorgesehen sind, die ein motorisiertes Wirkglied (34) enthalten, welches einen Sperrbolzen (38) betätigt, der von einem Schließelement (28) aufnehmbar ist, um die Verriegelung der Klappe (20) zu sichern und wobei die Einfüllvorrichtung in ein Befehlssystem integriert ist, welches eine elektronische Zentraleinheit zur Verwaltung der Befehle zur Verriegelung und Entsicherung der zu öffnenden Einrichtungen (20) des Fahrzeuges, und ein Modul zur Identifizierung eines autorisierten Benutzers des Fahrzeuges umfaßt, das einen Empfänger aufweist, welcher Signale mit einem von dem autorisierten Benutzer des Fahrzeuges getragenen Sender austauscht, und der als Antwort auf ein von dem Empfänger emitiertes Sendesignal ein Identifikationssignal aussendet, **dadurch gekennzeichnet, daß** die Klappe mit einem Schalter (42) verbunden ist, der durch ein manuelles Einwirken auf die Klappe (20) betätigbar ist, der zu dem Identifikations-Modul gehört und der, wenn er sich in seiner aktiven Stellung befindet, im Hinblick auf die Autorisierung zur Entriegelung der Klappe (20) eine Aktivierung des Identifikations-Modules verursacht.

2. Klappe nach Anspruch 1, **dadurch gekennzeichnet, daß** sie in der geschlossenen und verriegelten Stellung um ihre Schwenkachse (A) in Richtung der geschlossenen Stellung um einen Hub schwenkbar ist, welcher die Betätigung des Schalters (42) bis in seine aktive Stellung zuläßt.

3. Klappe nach Anspruch 2, **dadurch gekennzeichnet, daß** sie mit Hilfe elastischer Mittel (26) in ihre geschlossene Stellung zurückbewegbar ist, und daß der besagte Hub entgegen der auf die Klappe (20) durch diese elastischen Rückstellmittel ausgeübten Kraft ausführbar ist.

4. Klappe nach Anspruch 2 oder 3, **dadurch gekennzeichnet, daß** die Schwenkachse (A) der Klappe (20) in der Nähe eines seitlichen Randes (24) der Klappe (20) angeordnet ist, und daß der Schalter (42) in der Nähe eines anderen gegenüberliegenden seitlichen Randes (30) der Klappe angeordnet ist.

5. Klappe nach Anspruch 1, **dadurch gekennzeichnet, daß** ein wesentlicher Bereich der Wand der Klappe bei manueller Einwirkung in einer im wesentlichen zur Ebene der Wand senkrechten Richtung auf diesen Bereich elastisch deformierbar ist, und daß der Schalter senkrecht zu diesem deformierbaren Bereich angeordnet ist.

6. Klappe nach einem der vorhergehenden Ansprüche, **dadurch gekennzeichnet, daß** der Schalter (42) an einem feststehendes Teil der Einfüllvorrichtung angeordnet und durch einen Stößel betätigbar ist, der an der Klappe (20) befestigt ist.

7. Klappe nach einem der Ansprüche 1 bis 5, **dadurch gekennzeichnet, daß** der Schalter an der inneren Fläche der Klappe angeordnet und durch einen Stößel betätigbar ist, der an einem feststehenden Teil der Einfüllvorrichtung befestigt ist.

8. Klappe nach einem der Ansprüche 6 oder 7, **dadurch gekennzeichnet, daß** der Stößel (50) sich im wesentlichen entlang einer Richtung senkrecht zur Hauptebene der Klappe (20) erstreckt.

9. Klappe nach dem vorhergehenden Anspruch, **dadurch gekennzeichnet, daß** der Schalter (42, 48) durch eine abdichtende elastische Haut (46) geschützt ist.

10. Befehlssystem, welches mit einer Einfüllvorrichtung des Kraftstoffbehälters eines Kraftfahrzeuges verbunden ist, die eine Klappe enthält, wie sie in den vorhergehenden Ansprüchen definiert ist, wobei das Befehlssystem eine elektronische Zentraleinheit zur Verwaltung der Befehle zur Verriegelung und Entsicherung der zu öffnenden Einrichtungen (20) des Fahrzeuges und ein Modul zur Identifizierung eines autorisierten Benutzers des Fahrzeuges, mit einem Empfänger umfaßt, welcher mit einem von dem autorisierten Benutzer des Fahrzeuges getragenen Sender Signale austauscht, und welcher, als Antwort auf ein von dem Empfänger emitiertes Sendesignal, ein Identifikationssignal aussendet, **dadurch gekennzeichnet, daß** der Empfänger eine Antenne enthält, die sich in der Nähe des Betätigungsgriffes zum Öffnen einer Tür nahe der Klappe (20) befindet.

## Claims

1. A flap (20), in particular for a device for filling a motor vehicle fuel tank, of the type which is mounted so as to pivot about an articulation axis (A), between a closed position in which it prevents access to an upper orifice (18) of the device (10) and an open position in which it releases access thereto, of the type in which means (28, 34, 38) are provided for locking the flap (20) in the closed position which comprise a motorised actuator (34) which controls a bolt (38) intended to be received in a keeper (28) for providing the locking of the flap (20), and of the type in which the filling device is associated with a control system which comprises a central electronic unit for managing the locking and unlocking instructions for the vehicle doors and flaps (20), which comprises a module for identifying an authorised user of the vehicle comprising a receiver which exchanges signals with a transmitter carried by the authorised user of the vehicle and which, in response to an excitation signal transmitted by the receiver, transmits an identification signal, **characterised in that** it is associated with a switch (42) which is controlled by manual action on the flap (20), which belongs to the identification module and which, when it is in its active position, causes the activation of the identification module with a view to allowing the unlocking of the flap (20).

2. Flap according to Claim 1, **characterised in that**, in the closed and locked position, the flap is able to pivot about its articulation axis (A) in the direction corresponding to its closure and on an overtravel enabling the switch (42) to be actuated as far as its active position.

3. Flap according to Claim 2, **characterised in that** it is returned to its closed position by elastic means (26), and **in that** the overtravel takes place counter to the force applied to the flap (20) by these elastic retum means.

4. Flap according to one of Claims 2 or 3, **characterised in that** the articulation axis (A) of the flap (20) is arranged close to a lateral edge (24) of the flap (20), and the switch (42) is arranged close to another opposite lateral edge of the flap.

5. Flap according to Claim 1, **characterised in that** part of the panel constituting the flap is elastically deformable by manual action on this part in a direction substantially perpendicular to the overall plane of the panel, and **in that** the switch is arranged in line with this deformable part.

6. Flap according to any one of the preceding claims, **characterised in that** the switch (42) is carried by a fixed part of the filling device and is controlled by a pusher (50) carried by the flap (20).

7. Flap according to any one of Claims 1 to 5, **characterised in that** the switch is carried by the internal face of the flap and is controlled by a pusher carried by a fixed part of the filling device.

8. Flap according to one of Claims 6 or 7, **characterised in that** the pusher (50) extends in a direction perpendicular overall to the overall plane of the flap (20).

9. Flap according to the preceding claim, **characterised in that** the switch (42, 48) is protected by a flexible sealing membrane (46).

10. Control system associated with a device for filling a motor vehicle fuel tank comprising a flap as defined in the preceding claims, the control system being of the type comprising an electronic central unit for managing the instructions for locking and unlocking the doors and flaps (20) of the vehicle, a module for identifying an authorised user of the vehicle comprising a receiver which exchanges signals with a transmitter carried by the authorised user of the vehicle and which, in response to an excitation signal transmitted by the receiver, transmits an identification signal, **characterised in that** the receiver comprises an antenna in the vicinity of the handle controlling the opening of a door close to the flap (20).
